# EUROPEAN PATENT APPLICATION

(11) **EP 4 787 556 A1**
(43) Date of publication of application: **05.08.2026**
(21) Application number: 24869800.3
(22) Date of filing: 30.05.2024
(51) Int. Cl.: H01M 50/103

(54) **BATTERY HOUSING, BATTERY AND ELECTRICAL DEVICE**

(30) Priority: 28.09.2023 CN 202322673192 U
(71) Applicant: BYD Company Limited, Shenzhen, Guangdong 518118 (CN)
(72) Inventor: LIANG, Liwei, Shenzhen, Guangdong 518118 (CN); MA, Chenchong, Shenzhen, Guangdong 518118 (CN); ZHANG, Xiaoyong, Shenzhen, Guangdong 518118 (CN); HU, Shumin, Shenzhen, Guangdong 518118 (CN); OUYANG, Jinzhong, Shenzhen, Guangdong 518118 (CN)
(74) Representative: Mathys & Squire
(86) International application number: PCT/CN2024/096338
(87) International publication number: WO 2025/066237

(57) **Abstract**

A battery housing (10), a battery (100), and an electrical device are provided. The battery housing (10) includes a housing body (11) and a cover body (30). An accommodating cavity with an opening is formed on one side of the housing body (11) along a third direction, and the cover body (30) is configured to cover the opening. The cover body (30) includes a body portion and an end portion (32), the end portion (32) has a step structure and includes a step main portion (321) and a first step wall (50), the step main portion (321) includes a second step wall (51), the first step wall (50) is connected between the second step wall (51) and the body portion (31), the first step wall (51) is formed with a liquid injection hole (34), and the second step wall is formed with a terminal post hole (33).

## Description

### CROSS-REFERENCE TO RELATED APPLICATIONS

This application is proposed based on Chinese Patent Application No. 202322673192.X, filed on September 28, 2023, and claims priority to this Chinese Patent Application, which is incorporated herein by reference in its entirety.

### TECHNICAL FIELD

This application relates to the field of battery technologies, and in particular, to a battery housing, a battery, and an electrical device.

### BACKGROUND

In related technologies, a terminal post is disposed on a side surface of a housing having a smaller area, and has limited layout space. In addition, the terminal post usually protrudes from the side surface, and occupies space, which is unfavorable for battery assembly. Therefore, a thinned portion needs to be disposed on a large surface of the battery, and a terminal post is disposed on the thinned portion. In this way, the terminal post can be hidden within the thinned portion, thereby optimizing a spatial layout of an entire battery housing structure.

However, in the related technologies, because a liquid injection hole is disposed at an improper location, an electrolyte injected into the battery through the liquid injection hole has relatively low efficiency in wetting an electrode core. Therefore, an improvement needs to be made.

### SUMMARY

This application is intended to solve at least one of technical problems in the related art. Therefore, one objective of this application is to provide a battery housing. An end portion of a cover body is configured to be of a step structure, so that the end portion of the cover body and another portion of a housing body form a thinned portion with a smaller thickness. The end portion is configured to include a step main portion and a first step wall that form the step structure, a liquid injection hole is disposed on the first step wall, and a second step wall of the step main portion is formed with a terminal post hole, which can fully use space at the end portion of the cover body. In this way, a terminal post disposed in the terminal post hole can be hidden within the thinned portion, thereby optimizing a spatial layout of an entire battery housing structure, making an overall structure compact, and improving space utilization of a battery to some extent. In addition, because the liquid injection hole is disposed on the first step wall, the liquid injection hole can be closer to an electrode core disposed in an accommodating cavity, which can optimize a wetting path of an electrolyte in the electrode core. To be specific, the electrolyte can directly permeate into the electrode core through a gap between a positive electrode plate, a separator, and a negative electrode plate, which can improve liquid injection efficiency to some extent.

This application provides a battery having the foregoing battery housing.

This application further provides an electrical device having the foregoing battery.

According to a first aspect of this application, an embodiment provides a battery housing, including: a housing body, the housing body including a bottom plate and a side plate extending along a circumferential direction of the bottom plate, wherein a plurality of side plates are sequentially connected along the circumferential direction of the bottom plate, and an accommodating cavity with an opening is formed on one side of the housing body along a third direction; and a cover body, the cover body being configured to cover the opening, and an area of the cover body being larger than an area of the side plate, wherein the cover body includes a body portion and an end portion, the end portion is connected to one side of the body portion along a first direction, the first direction and the third direction intersect, the body portion and a portion of the housing body constitute a main housing portion, the end portion and another portion of the housing body constitute a thinned portion, a dimension of at least a portion of the thinned portion in the third direction is smaller than a dimension of the main housing portion in the third direction, the end portion includes a step main portion and a first step wall, the step main portion and the first step wall form a step structure, the step main portion includes a second step wall, one end of the first step wall is connected to the body portion, the other end of the first step wall is connected to the second step wall, the first step wall extends along the third direction toward a direction adjacent to the housing body, the first step wall has an included angle with the body portion and has an included angle with the second step wall, the first step wall is formed with a liquid injection hole, and the second step wall is formed with a terminal post hole.

According to this embodiment of this application, in the battery housing, the end portion of the cover body is configured to be of a step structure, so that the end portion of the cover body and the another portion of the housing body form the thinned portion with a smaller thickness. The end portion is configured to include the step main portion and the first step wall that form the step structure, the liquid injection hole is disposed on the first step wall, and the second step wall of the step main portion is formed with the terminal post hole, which can fully use space at the end portion of the cover body. In this way, a terminal post disposed in the terminal post hole can be hidden within the thinned portion, thereby optimizing a spatial layout of an entire battery housing structure, making an overall structure compact, and improving space utilization of a battery to some extent. In addition, because the liquid injection hole is disposed on the first step wall, the liquid injection hole can be closer to an electrode core disposed in the accommodating cavity, which can optimize a wetting path of an electrolyte in the electrode core. To be specific, the electrolyte can directly permeate into the electrode core through a gap between a positive electrode plate, a separator, and a negative electrode plate, which can improve liquid injection efficiency to some extent.

According to some embodiments of this application, a dimension of the first step wall in the third direction is W1, a maximum dimension of the liquid injection hole in the third direction is W2, W1 and W2 satisfy 0.3W1≤W2≤0.8W1, and W1 and W2 are measured in a same unit.

According to some embodiments of this application, a connection between the first step wall and the body portion is formed as a first rounded corner portion, and a radius of the first rounded corner portion is R1, wherein R1≥0.2 mm; and/or a connection between the first step wall and the second step wall is formed as a second rounded corner portion, and a radius of the second rounded corner portion is R2, wherein R2≥0.2 mm.

According to some embodiments of this application, a matching notch is formed on a side of the side plate facing the cover body, and the end portion matches the matching notch.

According to some embodiments of this application, the step main portion further includes a third step wall, one end of the third step wall is connected to the second step wall, the third step wall extends along the third direction toward the direction adjacent to the housing body, and an included angle exists between the third step wall and the second step wall.

According to some optional embodiments of this application, in the third direction, the dimension of the first step wall is larger than a dimension of the third step wall.

According to some embodiments of this application, the cover body and the housing body each are formed independently.

According to some embodiments of this application, the end portion of the cover body is formed through bending.

According to some embodiments of this application, the side plate and the bottom plate each are formed independently.

According to some embodiments of this application, a thickness of the side plate is greater than a thickness of the cover body, and/or a thickness of the side plate is greater than a thickness of the bottom plate.

According to some embodiments of this application, the side plate is disposed perpendicularly to the body portion, and the side plate is disposed perpendicularly to the bottom plate.

According to a second aspect of this application, an embodiment provides a battery, including: an electrode core; the battery housing according to the embodiments in the first aspect of this application, the electrode core being disposed in the accommodating cavity, and a thickness direction of the electrode core being consistent with the third direction; and a terminal post assembly, the terminal post assembly being disposed in the terminal post hole and electrically connected to the electrode core.

According to this embodiment of this application, in the battery, the foregoing battery housing is disposed, thereby optimizing a spatial layout of an entire battery housing structure, making an overall structure compact, and improving space utilization of a battery to some extent. In addition, because the liquid injection hole is disposed on the first step wall, the liquid injection hole can be closer to an electrode core disposed in the accommodating cavity, which can optimize a wetting path of an electrolyte in the electrode core. To be specific, the electrolyte can directly permeate into the electrode core through a gap between a positive electrode plate, a separator, and a negative electrode plate, which can improve liquid injection efficiency to some extent.

According to some embodiments of this application, a tab of the electrode core is disposed at an end of the electrode core adjacent to the end portion, and a projection of the tab on the first step wall does not overlap with the liquid injection hole.

According to some embodiments of this application, an end surface of the electrode core opposite to the first step wall is a surface of a first end, and a distance between the surface of the first end and an inner wall surface of the first step wall is H1, wherein H1 satisfies 0.2 mm≤H1≤3 mm.

According to some embodiments of this application, a surface of the body portion away from the housing body is a first surface, and the terminal post assembly disposed in the terminal post hole does not extend beyond the first surface along the third direction.

According to some embodiments of this application, the terminal post assembly includes a terminal post, an insulation structure, and a connection gasket, the terminal post passes through the terminal post hole, the insulation structure is disposed between the terminal post and the end portion, the connection gasket is connected to the terminal post and is disposed in the battery housing, and the connection gasket is electrically connected to the terminal post and a corresponding tab.

According to some embodiments of this application, the tab corresponding to the terminal post assembly is insulatively separated from the housing body.

According to some optional embodiments of this application, an insulation layer is disposed between the tab corresponding to the terminal post assembly and the housing body, and the tab corresponding to the terminal post assembly abuts against the insulation layer.

According to some embodiments of this application, the electrode core is disposed in the main housing portion, and the tab corresponding to the terminal post assembly is led out through the terminal post assembly.

According to a third aspect of this application, an embodiment provides an electrical device, including the battery according to the embodiments in the second aspect of this application.

According to this embodiment of this application, in the electrical device, the foregoing battery is disposed, thereby optimizing a spatial layout of an entire battery housing structure, making an overall structure compact, and improving space utilization of a battery to some extent. In addition, because the liquid injection hole is disposed on the first step wall, the liquid injection hole can be closer to an electrode core disposed in the accommodating cavity, which can optimize a wetting path of an electrolyte in the electrode core. To be specific, the electrolyte can directly permeate into the electrode core through a gap between a positive electrode plate, a separator, and a negative electrode plate, which can improve liquid injection efficiency to some extent.

Additional aspects and advantages of this application are partially provided in the following descriptions, and partially become clear from the following descriptions, or are learned from practice of this application.

### BRIEF DESCRIPTION OF DRAWINGS

The foregoing and/or additional aspects and advantages of this application will be clear and easily understood from the description of the embodiments taken in conjunction with the following drawings.
FIG. 1 is a schematic diagram of a battery according to some embodiments of this application;
FIG. 2 is an exploded view of the battery in FIG. 1;
FIG. 3 is a schematic diagram of a cover body of a battery housing and a terminal post assembly in FIG. 1;
FIG. 4 is a top view of the battery in FIG. 1;
FIG. 5 is a sectional view along a line A-A in FIG. 4;
FIG. 6 is a partially enlarged view at a location D in FIG. 5;
FIG. 7 is a sectional view along a line B-B in FIG. 4;
FIG. 8 is a partially enlarged view at a location E in FIG. 7;
FIG. 9 is a sectional view along a line C-C in FIG. 4;
FIG. 10 is a partially enlarged view at a location F in FIG. 9;
FIG. 11 is a partially enlarged view at a location G in FIG. 9;
FIG. 12 is a top view of a battery according to some other embodiments of this application; and
FIG. 13 is a top view of a battery according to still some other embodiments of this application.

### Reference numerals:

100: Battery;
10: Battery housing; 11: Housing body; 110: Opening; 12: Main housing portion; 13: Thinned portion;
20: Side plate; 21: First end; 22: Second end; 23: Matching notch;
30: Cover body; 31: Body portion; 32: End portion; 321: Step main portion; 33: Terminal post hole; 34: Liquid injection hole;
40: Bottom plate; 41: Accommodating cavity;
50: First step wall; 51: Second step wall; 52: Third step wall; 53: First rounded corner portion; 54: Second rounded corner portion; 55: Third rounded corner portion;
60: Sealing assembly; 61: Sealing cover; 62: Sealing plug; and
70: Electrode core; 71: Tab.

### DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having same or similar functions. The following embodiments described with reference to the accompanying drawings are exemplary and are merely intended to explain this application, but will not be understood as a limitation on this application.

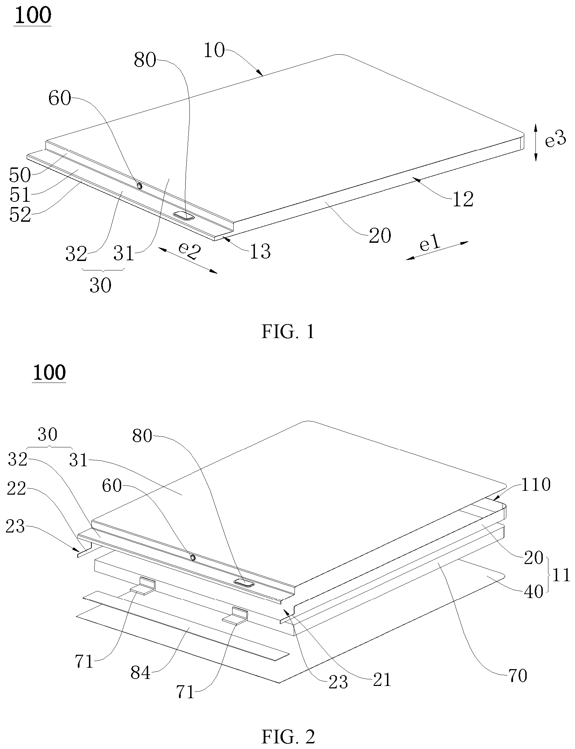

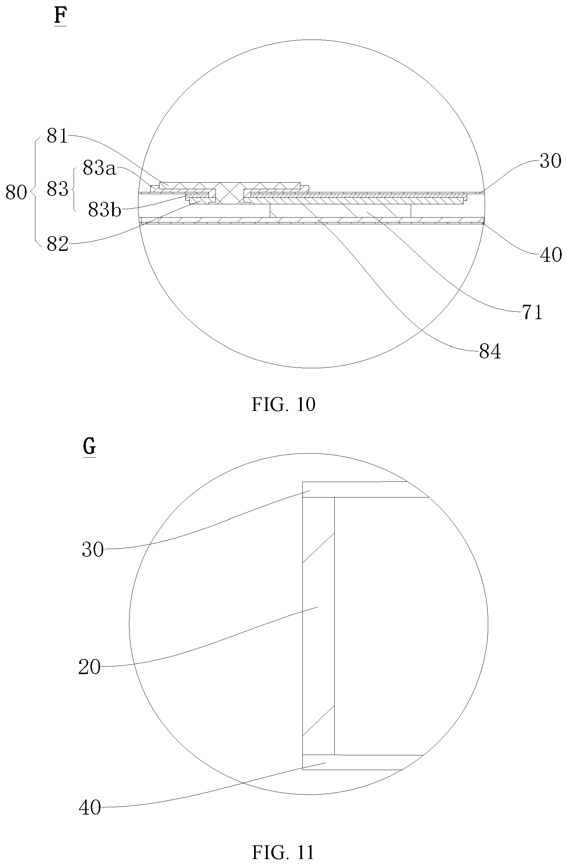

The following describes a battery housing 10 according to an embodiment of this application with reference to FIG. 1 to FIG. 13.

As shown in FIG. 1 to FIG. 11, according to a first aspect of this application, an embodiment provides a battery housing 10, including a housing body 11 and a cover body 30. An accommodating cavity with an opening 110 is formed on one side of the housing body 11 along a third direction (a direction e3 in FIG. 1), and the cover body 30 is configured to cover the opening 110.

The housing body 11 includes a bottom plate 40 and a side plate 20 extending along a circumferential direction of the bottom plate 40. A plurality of side plates 20 are sequentially connected along the circumferential direction of the bottom plate 40. For example, there are four side plates 20, and the four side plates 20 are sequentially connected along the circumferential direction of the bottom plate 40 to form a frame structure. An area of the cover body 30 is larger than an area of the side plate 20. In this way, the cover body 30 has a larger area, so that the cover body 30 is formed as a large surface of the battery housing 10.

The cover body 30 includes a body portion 31 and an end portion 32, the end portion 32 is connected to one side of the body portion 31 along a first direction (a direction e1 in FIG. 1), the first direction and the third direction intersect, the body portion 31 and a portion of the housing body 11 constitute a main housing portion 12, the end portion 32 and another portion of the housing body 11 constitute a thinned portion 13, and a dimension d2 of at least a portion of the thinned portion 13 in the third direction is smaller than a dimension d1 of the main housing portion 12 in the third direction. That the dimension d2 of the at least a portion of the thinned portion 13 in the third direction is smaller than the dimension d1 of the main housing portion 12 in the third direction may be that a dimension of a portion of the thinned portion 13 in the third direction is d2 and d2 is smaller than the dimension d1 of the main housing portion 12 in the third direction, or may be that a dimension of the thinned portion 13 in the third direction is d2 and d2 is smaller than the dimension d1 of the main housing portion 12 in the third direction.

As shown in FIG. 1 to FIG. 3, FIG. 7, and FIG. 8, in some embodiments, the end portion 32 is recessed toward the accommodating cavity 41 relative to the body portion 31. Through such an arrangement, the dimension of the thinned portion 13 in the third direction can be smaller than the dimension of the main housing portion 12 in the third direction, so that the end portion 32 has enough space to dispose a liquid injection hole 34. This can improve space utilization of a battery to some extent, and facilitate a liquid injection operation at the liquid injection hole 34.

In some embodiments, the end portion 32 is provided with the liquid injection hole 34. An electrolyte may be injected into the battery housing 10 through the liquid injection hole 34. An electrode core 70 of a battery 100 includes a positive electrode plate, a negative electrode plate, and a separator between the positive electrode plate and the negative electrode plate. The electrode core 70 is disposed in the accommodating cavity 41 of the battery housing 10. The electrolyte is injected into the battery housing 10 through the liquid injection hole 34 at the end portion 32 of the cover body 30. Because the liquid injection hole 34 is disposed at the end portion 32 and is disposed on one side of the electrode core 70 along the first direction, when the electrolyte is injected into the battery housing 10 through the liquid injection hole 34, the electrolyte may directly permeate into the electrode core 70 through a gap between the positive electrode plate, the separator, and the negative electrode plate, which can improve, to some extent, efficiency of the electrolyte in wetting the electrode core 70.

Optionally, as shown in FIG. 2, FIG. 7, and FIG. 8, a sealing assembly 60 may be disposed at the liquid injection hole 34, to seal the liquid injection hole 34. The sealing assembly 60 may include a sealing cover 61 and a sealing plug 62. After liquid injection is completed, the sealing plug 62 may be plugged into the liquid injection hole 34, and then the sealing cover 61 is pressed onto the sealing plug 62. In a process in which the sealing cover 61 is pressed onto the sealing plug 62, the sealing plug 62 is squeezed, to achieve a good sealing effect. In addition, the sealing assembly 60 is disposed at the liquid injection hole 34 disposed at a step, thereby fully using space at the step, and improving space utilization of the battery to some extent.

Optionally, a portion of the sealing plug 62 exposed on a surface of the cover body 30 may have a larger diameter than the liquid injection hole 34, and the sealing plug 62 and the liquid injection hole 34 are in an interference fit.

Optionally, the battery housing 10 may be made of a metal material such as stainless steel, nickel alloy, chromium alloy, or aluminum alloy, and the battery housing 10 may have relatively good electrical conductivity and a relatively good heat transfer property.

As shown in FIG. 1 to FIG. 3, according to some embodiments of this application, the end portion 32 is formed with a terminal post hole 33 for disposing a terminal post assembly 80. The end portion 32 of the battery housing 10 is connected to one side of the body portion 31, and the dimension of the thinned portion 13 in the third direction is smaller than the dimension of the main housing portion 12 in the third direction. The end portion 32 is formed with the terminal post hole 33 for disposing the terminal post assembly 80, and the terminal post assembly 80 is disposed at the end portion 32 through the terminal post hole 33. Therefore, when an overall thickness of the battery is relatively small, the terminal post assembly 80 may be fastened at the end portion 32. This facilitates disposing and fastening of the terminal post assembly 80 on the housing 10.

As shown in FIG. 1 to FIG. 8, according to some embodiments of this application, the end portion 32 includes a step main portion 321 and a first step wall 50, the step main portion 321 and the first step wall 50 form a step structure, the step main portion 321 includes a second step wall 51, one end of the first step wall 50 is connected to the body portion 31, the other end of the first step wall 50 is connected to the second step wall 51, the first step wall 50 extends along the third direction toward a direction adjacent to the housing body 11, and the first step wall 50 has an included angle with the body portion 31 and has an included angle with the second step wall 51.

The second step wall 51 is formed with the terminal post hole 33 The end portion 32 includes the first step wall 50 and the step main portion 321, and the first step wall 50 has the included angle with each of the body portion 31 and the second step wall 51, so that the end portion 32 of the cover body 30 forms the step structure. The second step wall 51 is formed with the terminal post hole 33, and the terminal post hole 33 is configured to dispose the terminal post assembly 80, thereby fully using space at the end portion of the cover body 30. In this way, a terminal post 81 disposed in the terminal post hole 33 can be hidden within the thinned portion 13, thereby optimizing a spatial layout of an entire battery housing structure, making an overall structure compact, and improving space utilization of the battery 100 to some extent.

The accommodating cavity 41 is formed on one side of the housing body 11 along the third direction, the electrode core 70 may be accommodated within the accommodating cavity 41, and the end portion 32 of the cover body 30 is provided with the terminal post hole 33 that may be configured to dispose the terminal post assembly 80. The accommodating cavity 41 is configured to accommodate the electrode core 70, and the terminal post hole 33 disposed on the second step wall 51 is configured to dispose the terminal post assembly 80. In this way, internal space of the battery housing 10 is arranged properly, a structure is compact, and space utilization is high, thereby increasing energy density of the battery 100 when the battery 100 has a fixed size.

The first step wall 50 is provided with the liquid injection hole 34. Through such an arrangement, the liquid injection hole 34 may be closer to the electrode core 70, and the liquid injection hole 34 is disposed on one side of the electrode core 70 along the first direction, which can optimize a wetting path of an electrolyte in the electrode core 70. To be specific, the electrolyte can directly permeate into the electrode core 70 through a gap between a positive electrode plate, a separator, and a negative electrode plate, which can improve liquid injection efficiency to some extent.

According to some embodiments of this application, in the battery housing 10, the end portion 32 of the cover body 30 is configured to be of the step structure, so that the end portion 32 of the cover body 30 and the another portion of the housing body 11 form the thinned portion 13 with a smaller thickness. The end portion 32 is configured to include the step main portion 321 and the first step wall 50 that form the step structure, the liquid injection hole 34 is disposed on the first step wall 50, and the second step wall 51 of the step main portion 321 is formed with the terminal post hole 33, which can fully use space at the end portion 32 of the cover body 30. In this way, the terminal post disposed in the terminal post hole 33 can be hidden within the thinned portion 13, thereby optimizing the spatial layout of the entire battery housing structure, making the overall structure compact, and improving space utilization of the battery 100 to some extent. In addition, because the liquid injection hole 34 is disposed on the first step wall 50, the liquid injection hole 34 can be closer to the electrode core 70 disposed in the accommodating cavity 41, which can optimize the wetting path of the electrolyte in the electrode core 70. To be specific, the electrolyte can directly permeate into the electrode core 70 through the gap between the positive electrode plate, the separator, and the negative electrode plate, which can improve liquid injection efficiency to some extent.

As shown in FIG. 1 to FIG. 3, according to some embodiments of this application, a tab 71 of the electrode core 70 is disposed at an end of the electrode core 70 adjacent to the end portion 32, and a projection of the tab 71 on the first step wall 50 does not overlap with the liquid injection hole 34. Through such an arrangement, the electrolyte can be subsequently injected into the battery 100 through the liquid injection hole 34, thereby avoiding interference from the tab 71 with the liquid injection operation.

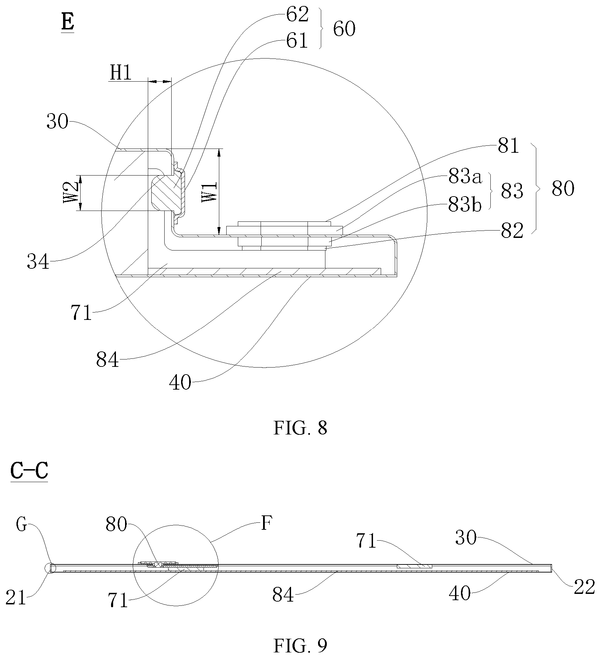

As shown in FIG. 8, according to some embodiments of this application, a dimension of the first step wall 50 in the third direction is W1, a maximum dimension of the liquid injection hole 34 in the third direction is W2, W1 and W2 satisfy 0.3W1≤W2≤0.8W1, and W1 and W2 are measured in a same unit. Through such an arrangement, the dimension of the first step wall 50 and the dimension of the liquid injection hole 34 are moderate and proper, which can not only facilitate the liquid injection operation but also facilitate sealing of the liquid injection hole 34.

As shown in FIG. 8, according to some embodiments of this application, an end surface of the electrode core 70 opposite to the first step wall 50 is a surface of a first end 21, and a distance between the surface of the first end 21 and an inner wall surface of the first step wall 50 is H1, where H1 satisfies 0.2 mm≤H1≤3 mm. H1 within such a dimension range is set, to reserve enough space for the liquid injection operation, thereby facilitating the liquid injection operation.

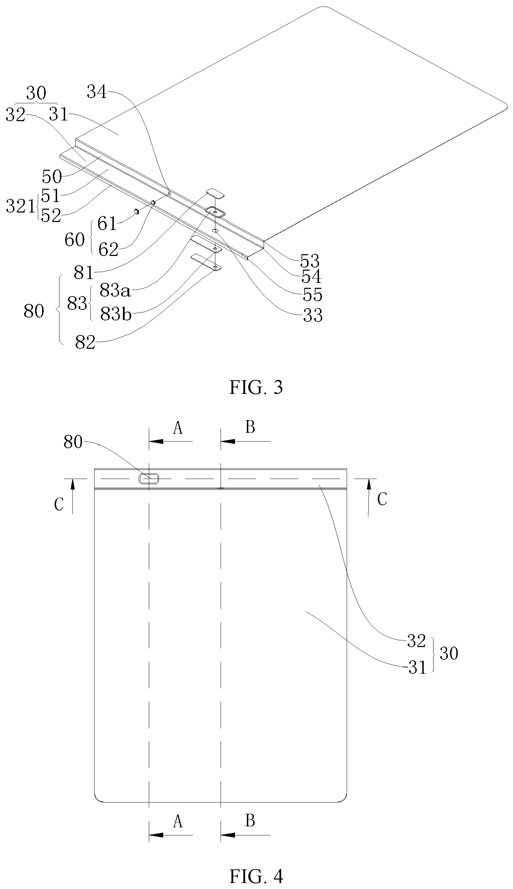

As shown in FIG. 4 to FIG. 8, according to some embodiments of this application, along the third direction, a surface of the body portion 31 away from the bottom plate 40 is a first surface, and the terminal post assembly 80 disposed in the terminal post hole 33 does not extend beyond the first surface. That the terminal post assembly 80 does not extend beyond the first surface can improve space utilization of the battery 100 and increase energy density of the battery 100 when the battery 100 has a fixed size.

As shown in FIG. 4 to FIG. 8, according to some embodiments of this application, a connection between the first step wall 50 and the body portion 31 is formed as a first rounded corner portion 53, and a radius of the first rounded corner portion 53 is R1, where R1≥0.2 mm. The first rounded corner portion 53 is disposed, so that the connection between the first step wall 50 and the body portion 31 transitions smoothly, which can reduce stress concentration at the connection. In addition, the first rounded corner portion 53 can make an appearance of the cover body 30 more aesthetically pleasing. In addition, the first rounded corner portion 53 is disposed, to improve safety of the battery housing 10 in a production, processing, and assembly process to some extent.

As shown in FIG. 4 to FIG. 8, the connection between the first step wall 50 and the second step wall 51 is formed as a second rounded corner portion 54, and a radius of the second rounded corner portion 54 is R2, where R2≥0.2 mm. The second rounded corner portion 54 is disposed, so that the connection between the first step wall 50 and the second step wall 51 transitions smoothly, which can reduce stress concentration at the connection. In addition, the second rounded corner portion 54 can make the appearance of the cover body 30 more aesthetically pleasing. In addition, the second rounded corner portion 54 is disposed, to improve safety of the battery housing 10 in a production, processing, and assembly process to some extent.

As shown in FIG. 1 and FIG. 2, according to some embodiments of this application, a matching notch 23 is formed on a side of the side plate 20 facing the housing body 11, and the end portion 32 matches the matching notch 23. The side plate 20 and the housing body 11 match the end portion 32 through the matching notch 23. The matching notch 23 can ensure a matching effect and avoid misalignment during matching, thereby improving positioning accuracy during matching and facilitating processing.

As shown in FIG. 1 and FIG. 2, according to some embodiments of this application, the housing body 11 includes the bottom plate 40 and the side plate 20 extending along the circumferential direction of the cover body 30, the side plate 20 is formed with the matching notch 23, and a step portion 32 matches the matching notch 23. In an assembly process of the cover body 30 and the side plate 20 of the battery housing 10, the matching notch 23 of the side plate 20 matches and limits the end portion 32 of the cover body 30. In this case, the body portion 31 of the cover body 30 is lapped with a remaining portion of the side plate 20. After limitation is completed, a lapping portion of the cover body 30 and the side plate 20 is connected and positioned, for example, may be connected and positioned through welding, which simplifies the assembly process, facilitates processing, and can ensure a forming effect of the battery housing 10.

For example, as shown in FIG. 1 and FIG. 2, two ends of the side plate 20 along the circumferential extension direction of the cover body 30 are the first end 21 and a second end 22, the first end 21 and the second end 22 are spaced apart, the first end 21 and the second end 22 each can be formed with a matching notch 23, and the step portion 32 may be connected to the first end 21 and the second end 22. Matching notches 23 of the first end 21 and the second end 22 of the side plate 20 can ensure a connection effect between the side plate 20 and the cover body 30, avoid misalignment in a connection process, improve positioning accuracy during connection, and facilitate processing, thereby ensuring a forming effect of the battery housing 10.

Optionally, the first end 21 and the second end 22 are respectively disposed on two opposite sides of the cover body 30 along a second direction (a direction e2 in FIG. 1). The first direction, the second direction, and the third direction intersect in pairs.

As shown in FIG. 1 to FIG. 8, according to some embodiments of this application, the end portion 32 includes the step main portion 321 and the first step wall 50, the step main portion 321 includes the second step wall 51 and a third step wall 52, one end of the first step wall 50 is connected to the body portion 31, the other end of the first step wall 50 is connected to the second step wall 51, the first step wall 50 extends along the third direction toward the direction adjacent to the housing body 11, one end of the third step wall 52 is connected to the second step wall 51, the third step wall 52 extends along the third direction toward the direction adjacent to the housing body 11, the first step wall 50 has an included angle with the body portion 31 and has an included angle with the second step wall 51, and an included angle exists between the third step wall 52 and the second step wall 51.

The step main portion 321 includes the second step wall 51 and the third step wall 52, an included angle exists between the first step wall 50 and each of the body portion 31 and the second step wall 51, and an included angle exists between the third step wall 52 and the second step wall 51. In this way, the cover body 30 forms the step structure. In this way, a structure is simple and proper, space utilization is high, and energy density of the battery 100 can be increased to some extent.

For example, as shown in FIG. 1 and FIG. 2, two ends of the side plate 20 along the circumferential extension direction of the cover body 30 are respectively the first end 21 and the second end 22, the first end 21 and the second end 22 are spaced apart, the first end 21 and the second end 22 each can be formed with a matching notch 23, the step portion 32 may be connected to the first end 21 and the second end 22, and the first end 21 and the second end 22 are respectively disposed on two opposite sides of the cover body 30 along the second direction (the direction e2 in FIG. 1). The third step wall 52 of the step portion 32 may be connected to the first end 21 and the second end 22, and the step main portion 321 and the another portion of the housing body 11 form the thinned portion 13. Through such an arrangement, the third step wall 52 may be connected to the matching notches 23 of the first end 21 and the second end 22, which can ensure a connection effect between the side plate 20 and the cover body 30, avoid misalignment in a connection process, improve positioning accuracy during connection, and facilitate processing, thereby ensuring a forming effect of the battery housing 10.

As shown in FIG. 1 to FIG. 8, according to some embodiments of this application, in the third direction, the dimension of the first step wall 50 is larger than a dimension of the third step wall 52. Such an arrangement can improve space utilization of the battery 100 and increase energy density of the battery 100. The first step wall 50 has a relatively large size, which can provide enough operating space and facilitate the liquid injection operation and a sealing operation after liquid injection is completed. The size of the third step wall 52 is adapted to a thickness of the terminal post assembly 80, so that internal space of the battery housing 10 is arranged properly, and a structure is more compact.

As shown in FIG. 4 to FIG. 8, in some embodiments, a connection between the third step wall 52 and the second step wall 51 is formed as a third rounded corner portion 55, and a radius of the third rounded corner portion 55 is R3, where R3≥0.2 mm. The third rounded corner portion 55 is disposed, so that the connection between the third step wall 52 and the second step wall 51 transitions smoothly, which can reduce stress concentration at the connection. In addition, the third rounded corner portion 55 can make the appearance of the cover body 30 more aesthetically pleasing. In addition, the third rounded corner portion 55 is disposed, to improve safety of the battery housing 10 in a production, processing, and assembly process to some extent.

As shown in FIG. 1 to FIG. 3, the cover body 30 and the housing body 11 each are formed independently, and the cover body 30 is separately processed into a stepped shape. Compared with another processing method, such as the integrated forming of the cover body 30 and the side plate 20, this method has lower technological difficulty and can reduce the difficulty of processing and forming the battery housing 10. In addition, this arrangement can be applied to battery housings 10 with different shapes and material thicknesses, having a wide application scope, and providing high flexibility.

As shown in FIG. 1 to FIG. 4, according to some embodiments of this application, the end portion 32 of the cover body 30 is formed by using a bending process. The bending process has relatively low process difficulty, which facilitates processing and forming of the end portion 32. In addition, the bending process is applicable to processing materials with different thicknesses, having a wide application scope and providing high flexibility.

As shown in FIG. 1 to FIG. 4, according to some embodiments of this application, the housing body 11 includes the bottom plate 40 and the side plate 20 extending along the circumferential direction of the cover body 30, and the side plate 20 and the bottom plate 40 each are formed independently. The side plate 20, the cover body 30, and the bottom plate 40 each are formed independently. Compared with another forming method, such as integrated forming of the cover body 30 and the side plate 20 or integrated forming of the bottom plate 40 and the side plate 20, this method has lower technological difficulty, and it is more convenient for processing.

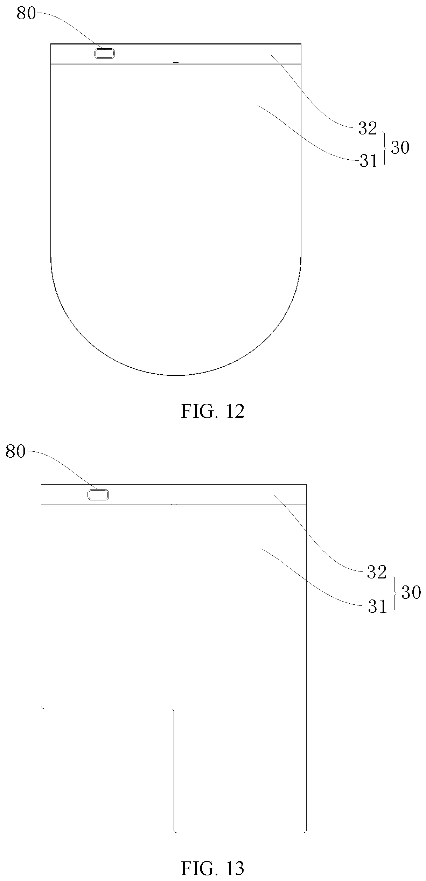

For example, as shown in FIG. 12 and FIG. 13, the side plate 20 may be formed by using the bending process. The bending process has relatively low process difficulty, and can facilitate processing and forming of the side plate 20.

In addition, the bending process is applicable to processing battery housings 10 with different material thicknesses and shapes, having a wide application scope and providing high flexibility. For example, as shown in FIG. 12 and FIG. 13, the side plate 20 may be formed into different shapes through bending, and the cover body 30 and the bottom plate 40 may be adapted based on a shape of the side plate 20, thereby forming battery housings 10 with different shapes. Therefore, such a processing method has a wide application scope and provides high flexibility.

As shown in FIG. 9 to FIG. 11, according to some embodiments of this application, the housing body 11 includes the bottom plate 40 and the side plate 20 extending along the circumferential direction of the cover body 30, and a thickness of the side plate 20 is greater than a thickness of the cover body 30. The thicker side plate 20 has higher mechanical strength, which can ensure structural strength of the battery housing 10. In addition, the thicker side plate 20 can increase a contact area between the side plate 20 and each of the cover body 30 and the bottom plate 40, thereby facilitating processing and fastening.

As shown in FIG. 9 to FIG. 11, according to some embodiments of this application, the housing body 11 includes the bottom plate 40 and the side plate 20 extending along the circumferential direction of the cover body 30, and the thickness of the side plate 20 is greater than a thickness of the bottom plate 40. The thicker side plate 20 has higher mechanical strength, which can ensure structural strength of the battery housing 10. In addition, the thicker side plate 20 can increase a contact area between the side plate 20 and each of the cover body 30 and the bottom plate 40, thereby facilitating processing and fastening.

Optionally, the side plate 20 and the cover body 30 may be connected through welding or bonding, and the side plate 20 and the bottom plate 40 may be connected through welding or bonding.

As shown in FIG. 9 to FIG. 11, according to some embodiments of this application, the housing body 11 includes the bottom plate 40 and the side plate 20 extending along the circumferential direction of the cover body 30, the side plate 20 is disposed perpendicularly to the body portion 31, and the side plate 20 is disposed perpendicularly to the bottom plate 40. The side plate 20 is connected perpendicularly to each of the body portion 31 of the cover body 30 and the bottom plate 40. When the battery housing 10 has a fixed size, such an arrangement can increase a size of the accommodating cavity 41 inside the battery housing 10, improve internal space utilization of the battery housing 10, and increase energy density of the battery 100.

As shown in FIG. 1 to FIG. 13, according to a second aspect of this application, an embodiment provides a battery 100, including the battery housing 10 according to the embodiments in the first aspect of this application, an electrode core 70, and a terminal post assembly 80. The electrode core 70 is disposed in an accommodating cavity 41, the battery housing 10 has a terminal post hole 33, a thickness direction of the electrode core is consistent with a third direction, and the terminal post assembly 80 is disposed in the terminal post hole 33 and electrically connected to the electrode core 70.

The electrode core 70 may be disposed in the accommodating cavity 41 formed on one side of a housing body 11 along the third direction, and the terminal post assembly 80 is disposed in an end portion 32 of a cover body 30 through the terminal post hole 33. Therefore, an internal spatial layout of the battery housing 10 is proper, and space utilization of the battery 100 is high, which can increase energy density of the battery 100 to some extent.

In this embodiment of this application, in the battery 100, the foregoing battery housing 10 is disposed. When an electrolyte is injected into the battery housing 10 through a liquid injection hole 34, the electrolyte may directly permeate into the electrode core 70 through a gap between a positive electrode plate, a separator, and a negative electrode plate, which can improve efficiency of the electrolyte in wetting the electrode core 70.

In addition, this arrangement can further optimize a spatial layout of an entire battery housing structure, make an overall structure compact, and improve space utilization of the battery 100 to some extent. In addition, because the liquid injection hole 34 is disposed on a first step wall 50, the liquid injection hole 34 can be closer to the electrode core 70 disposed in the accommodating cavity 41, which can optimize a wetting path of the electrolyte in the electrode core 70. To be specific, the electrolyte can directly permeate into the electrode core 70 through the gap between the positive electrode plate, the separator, and the negative electrode plate, which can improve liquid injection efficiency to some extent.

As shown in FIG. 1 to FIG. 3, according to some embodiments of this application, a tab 71 of the electrode core 70 is disposed at an end of the electrode core 70 adjacent to the end portion 32, and a projection of the tab 71 on the first step wall 50 does not overlap with the liquid injection hole 34. Through such an arrangement, the electrolyte can be subsequently injected into the battery 100 through the liquid injection hole 34, thereby avoiding interference from the tab 71 with a liquid injection operation.

As shown in FIG. 8, according to some embodiments of this application, an end surface of the electrode core 70 opposite to the first step wall 50 is a surface of a first end 21, and a distance between the surface of the first end 21 and an inner wall surface of the first step wall 50 is H1, where H1 satisfies 0.2 mm≤H1≤3 mm. H1 within such a dimension range is set, to reserve enough space for the liquid injection operation, thereby facilitating the liquid injection operation.

As shown in FIG. 4 to FIG. 8, according to some embodiments of this application, along the third direction, a surface of a body portion 31 away from a bottom plate 40 is a first surface, and the terminal post assembly 80 disposed in the terminal post hole 33 does not extend beyond the first surface. That the terminal post assembly 80 does not extend beyond the first surface can improve space utilization of the battery 100 and increase energy density of the battery 100 when the battery 100 has a fixed size.

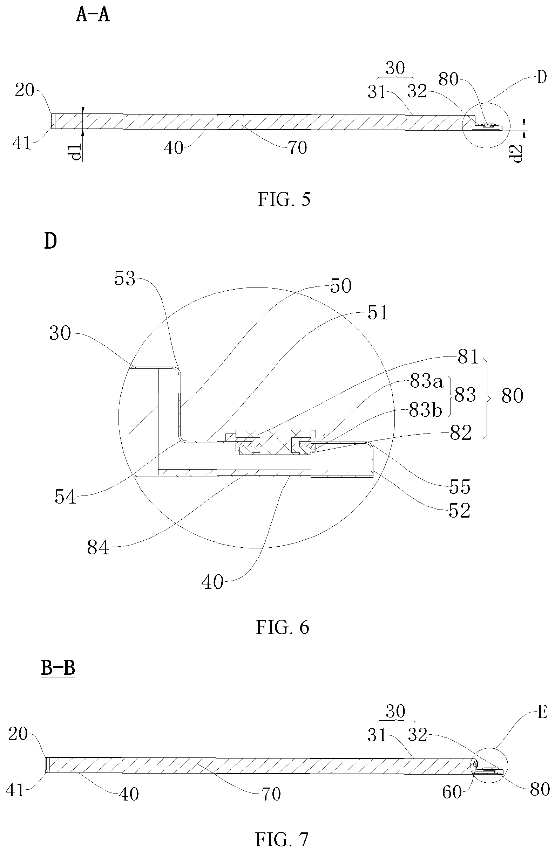

As shown in FIG. 5, FIG. 6, FIG. 9, and FIG. 10, according to some embodiments of this application, the terminal post assembly 80 includes a terminal post 81, an insulation structure 83, and a connection gasket 82, the terminal post 81 passes through the terminal post hole 33, the insulation structure 83 is disposed between the terminal post 81 and the end portion 32, the connection gasket 82 is connected to the terminal post 81 and is disposed in the battery housing 10, and the connection gasket 82 is electrically connected to the terminal post 81 and the corresponding tab 71. In an assembly process of the terminal post assembly 80 and the battery housing 10, the terminal post assembly 80 sequentially passes through the insulation structure 83 and the connection gasket 82 from an outside to an inside of the battery housing 10, and the connection gasket 82 is electrically connected to the terminal post 81 and the corresponding tab 71. The assembly process is simple.

The insulation structure 83 may insulate the terminal post 81 from the housing body 11, to avoid a short circuit of the battery 100 due to contact between the terminal post 81 and the housing body 11. The connection gasket 82 may increase a contact area between the terminal post assembly 80 and the tab 71, thereby improving a connection effect.

Optionally, the terminal post assembly 80 and the tab 71 may be electrically connected through welding or bonding.

Optionally, the other tab 71 of the terminal post assembly may be electrically connected to the battery housing 10; and after connection is completed, forms a positive electrode and a negative electrode of the battery 100 with the tab 71 connected to the terminal post 81.

Optionally, the insulation structure 83 and the connection gasket 82 each may be provided with a through hole, and through holes of the insulation structure 83 and the connection gasket 82 are concentrically disposed with the terminal post hole 33, to facilitate assembly of the terminal post assembly 80.

Optionally, in the insulation structure 83, a first insulating member 83a and a second insulating member 83b may be sequentially disposed along a direction of the terminal post 81, to provide insulation protection for an inner surface and an outer surface of the terminal post 81 and the housing body 11, respectively, thereby ensuring an insulation effect.

As shown in FIG. 5, FIG. 6, FIG. 9, and FIG. 10, according to some embodiments of this application, the tab 71 corresponding to the terminal post assembly 80 is insulatively separated from the housing body 11. Through such an arrangement, the tab 71 corresponding to the terminal post assembly 80 can be insulated from the housing body 11, to avoid a short circuit of the battery 100 due to contact between the tab 71 and the housing body 11.

As shown in FIG. 5, FIG. 6, FIG. 9, and FIG. 10, according to some embodiments of this application, an insulation layer 84 is disposed between the tab 71 corresponding to the terminal post assembly 80 and the housing body 11, and the tab 71 corresponding to the terminal post assembly 80 abuts against the insulation layer 84. The insulation layer 84 may insulate the tab 71 from the housing body 11, to avoid a short circuit of the battery 100 due to contact between the tab 71 and the housing body 11.

Optionally, the tab 71 may be disposed between the insulation layer 84 and the terminal post assembly 80, which can avoid contact between the tab 71 and the battery housing 10 due to vibrating of the tab 71 in a subsequent use process of the battery 100, thereby avoiding a short circuit of the battery 100 and improving safety of the battery 100.

Optionally, the insulation layer 84 may be an insulation adhesive paper or an insulation coating.

As shown in FIG. 5, FIG. 6, FIG. 9, and FIG. 10, according to some embodiments of this application, the electrode core 70 is disposed in a main housing portion 12, the terminal post assembly 80 is disposed in a thinned portion, and the tab 71 corresponding to the terminal post assembly 80 is led out through the terminal post assembly 80. The main housing portion 12 is configured to accommodate the electrode core 70, and the thinned portion 133 is configured to dispose the terminal post assembly 80. In this way, internal space of the battery housing 10 is arranged properly, a structure is compact, and space utilization is high, thereby increasing energy density of the battery 100 when the battery 100 has a fixed size. In addition, such an arrangement facilitates connection between the terminal post assembly 80 and the corresponding tab 71.

As shown in FIG. 1 to FIG. 13, according to a third aspect of this application, an embodiment provides an electrical device, including the battery according to the embodiments in the second aspect of this application.

In this embodiment of this application, in the electrical device, the foregoing battery 100 is disposed. When an electrolyte is injected into a battery housing 10 through a liquid injection hole 34, the electrolyte may directly permeate into an electrode core 70 through a gap between a positive electrode plate, a separator, and a negative electrode plate, which can improve efficiency of the electrolyte in wetting the electrode core 70.

In addition, this arrangement can further optimize a spatial layout of an entire battery housing structure, make an overall structure compact, and improve space utilization of the battery 100 to some extent. In addition, because the liquid injection hole 34 is disposed on a first step wall 50, the liquid injection hole 34 can be closer to the electrode core 70 disposed in an accommodating cavity 41, which can optimize a wetting path of the electrolyte in the electrode core 70. To be specific, the electrolyte can directly permeate into the electrode core 70 through the gap between the positive electrode plate, the separator, and the negative electrode plate, which can improve liquid injection efficiency to some extent.

Optionally, the electrical device may be a vehicle. For example, the electrical device may be an automobile.

In the description of this specification, descriptions referring to the terms such as "one embodiment", "some embodiments", "example embodiments", "examples", "specific examples", or "some examples" mean that specific features, structures, materials, or characteristics described with reference to this embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable method.

Although embodiments of this application have been shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. A battery housing (10), comprising:
a housing body (11), the housing body (11) comprising a bottom plate (40) and a side plate (20) extending along a circumferential direction of the bottom plate (40), wherein a plurality of side plates (20) are sequentially connected along the circumferential direction of the bottom plate (40), and an accommodating cavity (41) with an opening (110) is formed on one side of the housing body (11) along a third direction; and
a cover body (30), the cover body (30) being configured to cover the opening (110), and an area of the cover body (30) being larger than an area of the side plate (20), wherein
the cover body (30) comprises a body portion (31) and an end portion (32), the end portion (32) is connected to one side of the body portion (31) along a first direction, the first direction and the third direction intersect, the body portion (31) and a portion of the housing body (11) constitute a main housing portion (12), the end portion (32) and another portion of the housing body (11) constitute a thinned portion (13), a dimension of at least a portion of the thinned portion (13) in the third direction is smaller than a dimension of the main housing portion (12) in the third direction, the end portion (32) comprises a step main portion (321) and a first step wall (50), the step main portion (321) and the first step wall (50) form a step structure, the step main portion (321) comprises a second step wall (51), one end of the first step wall (50) is connected to the body portion (31), the other end of the first step wall (50) is connected to the second step wall (51), the first step wall (50) extends along the third direction toward a direction adjacent to the housing body (11), the first step wall (50) has an included angle with the body portion (31) and has an included angle with the second step wall (51), the first step wall (50) is formed with a liquid injection hole (34), and the second step wall (51) is formed with a terminal post hole (33).

2. The battery housing (10) according to claim 1, wherein a dimension of the first step wall (50) in the third direction is W1, a maximum dimension of the liquid injection hole (34) in the third direction is W2, W1 and W2 satisfy 0.3W1≤W2≤0.8W1, and W1 and W2 are measured in a same unit.

3. The battery housing (10) according to claim 1 or 2, wherein a connection between the first step wall (50) and the body portion (31) is formed as a first rounded corner portion (53), and a radius of the first rounded corner portion (53) is R1, wherein R1≥0.2 mm; and/or a connection between the first step wall (50) and the second step wall (51) is formed as a second rounded corner portion (54), and a radius of the second rounded corner portion (54) is R2, wherein R2≥0.2 mm.

4. The battery housing (10) according to any one of claims 1 to 3, wherein a matching notch (23) is formed on a side of the side plate (20) facing the cover body (30), and the end portion (32) matches the matching notch (23).

5. The battery housing (10) according to any one of claims 1 to 4, wherein the step main portion (321) further comprises a third step wall (52), one end of the third step wall (52) is connected to the second step wall (51), the third step wall (52) extends along the third direction toward the direction adjacent to the housing body (11), and an included angle exists between the third step wall (52) and the second step wall (51).

6. The battery housing (10) according to claim 5, wherein in the third direction, the dimension of the first step wall (50) is larger than a dimension of the third step wall (52).

7. The battery housing (10) according to any one of claims 1 to 6, wherein the cover body (30) and the housing body (11) each are formed independently.

8. The battery housing (10) according to any one of claims 1 to 7, wherein the end portion (32) of the cover body (30) is formed through bending.

9. The battery housing (10) according to any one of claims 1 to 8, wherein the side plate (20) and the bottom plate (40) each are formed independently.

10. The battery housing (10) according to any one of claims 1 to 9, wherein a thickness of the side plate (20) is greater than a thickness of the cover body (30), and/or a thickness of the side plate (20) is greater than a thickness of the bottom plate (40).

11. The battery housing (10) according to any one of claims 1 to 10, wherein the side plate (20) is disposed perpendicularly to the body portion (31), and the side plate (20) is disposed perpendicularly to the bottom plate (40).

12. A battery (100), comprising:
an electrode core (70);
the battery housing (10) according to any one of claims 1 to 11, the electrode core (70) being disposed in the accommodating cavity (41), and a thickness direction of the electrode core (70) being consistent with the third direction; and
a terminal post assembly, the terminal post assembly being disposed in the terminal post hole (33) and electrically connected to the electrode core (70).

13. The battery (100) according to claim 12, wherein a tab (71) of the electrode core (70) is disposed at an end of the electrode core (70) adjacent to the end portion (32), and a projection of the tab (71) on the first step wall (50) does not overlap with the liquid injection hole (34).

14. The battery (100) according to claim 12 or 13, wherein an end surface of the electrode core (70) opposite to the first step wall (50) is a surface of a first end (21), and a distance between the surface of the first end (21) and an inner wall surface of the first step wall (50) is H1, wherein H1 satisfies 0.2 mm≤H1≤3 mm.

15. The battery (100) according to any one of claims 12 to 14, wherein a surface of the body portion (31) away from the housing body (11) is a first surface, and the terminal post assembly disposed in the terminal post hole (33) does not extend beyond the first surface along the third direction.

16. The battery (100) according to any one of claims 12 to 15, wherein the terminal post assembly comprises a terminal post, an insulation structure, and a connection gasket, the terminal post passes through the terminal post hole (33), the insulation structure is disposed between the terminal post and the end portion (32), the connection gasket is connected to the terminal post and disposed in the battery housing (10), and the connection gasket is electrically connected to the terminal post and a corresponding tab (71).

17. The battery (100) according to any one of claims 12 to 16, wherein the tab (71) corresponding to the terminal post assembly is insulatively separated from the housing body (11).

18. The battery (100) according to claim 17, wherein an insulation layer is disposed between the tab (71) corresponding to the terminal post assembly and the housing body (11), and the tab (71) corresponding to the terminal post assembly abuts against the insulation layer.

19. The battery (100) according to any one of claims 12 to 18, wherein the electrode core (70) is disposed in the main housing portion (12), and the tab (71) corresponding to the terminal post assembly is led out through the terminal post assembly.

20. An electrical device, comprising the battery (100) according to any one of claims 12 to 19.
